# EUROPEAN PATENT APPLICATION

(11) **EP 4 203 338 A1**
(43) Date of publication of application: **28.06.2023**
(21) Application number: 21868501.4
(22) Date of filing: 07.09.2021
(51) Int. Cl.: H04B 7/06, H04B 7/04, H04W 52/42

(54) **COMMUNICATION METHOD, APPARATUS, AND SYSTEM**

(30) Priority: 21.09.2020 CN 202010997701
(71) Applicant: Huawei Technologies Co., Ltd., Shenzhen, Guangdong 518129 (CN)
(72) Inventor: YIN, Jixiong, Shenzhen, Guangdong 518129 (CN); JI, Kuiwen, Shenzhen, Guangdong 518129 (CN); LI, Qinghua, Shenzhen, Guangdong 518129 (CN); PAN, Ming, Shenzhen, Guangdong 518129 (CN); HU, Congjie, Shenzhen, Guangdong 518129 (CN); CAI, Meng, Shenzhen, Guangdong 518129 (CN)
(74) Representative: Pfenning, Meinig & Partner mbB
(86) International application number: PCT/CN2021/116836
(87) International publication number: WO 2022/057676

(57) **Abstract**

Embodiments of this application disclose a communication method, apparatus, and system, which are applied to the field of communication technologies. The method in embodiments of this application includes: first, determining that a change value of state information of a first antenna is less than a first threshold, where the state information includes any one or more of a direction, an amplitude, and an angular velocity of the antenna; then, obtaining a receive power of the first antenna and a transmit power of a second antenna; further, determining that a change value of state information of the second antenna is less than a second threshold; and finally, determining first target state information based on the receive power of the first antenna and the transmit power of the second antenna, to adjust beam state information of the first antenna based on the first target state information. In this way, accuracy of beam adjustment is improved, and therefore, accuracy of beam tracking is improved.

## Description

This application claims priority to Chinese Patent Application No. 202010997701.2, filed with the China National Intellectual Property Administration on September 21, 2020 and entitled "COMMUNICATION METHOD, APPARATUS, AND SYSTEM", which is incorporated herein by reference in its entirety.

### TECHNICAL FIELD

Embodiments of this application relate to the field of communication technologies, and in particular, to a communication method, apparatus, and system.

### BACKGROUND

As mobile wireless networks evolve into the era of 5th generation mobile communication technologies (5th generation wireless systems, 5G), traffic of a base station is increasing, and microwave transmission for base station backhaul also ushers in the era of over 10 bits per second (bits per second, Gbps). Therefore, a high-bandwidth microwave solution becomes a main solution for end access and small-scale aggregation of 5G service backhaul. Due to sunlight, wind, and other reasons, towers and antennas secured on the towers may shake slowly or quickly. As a result, a receive power deteriorates greatly or even link interruption occurs, affecting a customer key performance indicator (key performance indicator, KPI) and customer experience.

Currently, a Cassegrain antenna with an adjustable secondary reflector may be used for beam tracking. To be specific, a sensor is used to estimate an antenna pose and drive a motor to adjust the secondary reflector, to enable a beam to be adjusted in a direction opposite to a direction in which the antenna shakes, so that the beam is always aligned with a peer antenna.

However, a sensor used by a control module is substantially subject to temperature. Due to factors such as temperature drift, noise, sensor installation errors, and long-term aging, accuracy of antenna pose estimation is reduced, that is, accuracy of beam adjustment is reduced, and therefore, accuracy of beam tracking is reduced.

### SUMMARY

Embodiments of this application provide a communication method, apparatus, and system, to improve accuracy of beam adjustment, and further improve accuracy of beam tracking.

A first aspect of embodiments of this application provides a communication method. A communication apparatus adjusts a beam angle of a first antenna for a plurality of times. Therefore, a change of state information of the first antenna when the beam angle is adjusted within a preset period may be obtained through calculation processing. Then, a change value of the state information of the first antenna is compared with a first threshold. When the change value of the state information of the first antenna is less than the first threshold, it may be determined that the first antenna is in a "static state". To be specific, a change amplitude of the first antenna is less than an error value output by a sensor that is in a "static state" and that is connected to the first antenna. Then, when the beam angle of the first antenna is a different angle, the communication apparatus separately obtains a receive power of the first antenna and a transmit power of a second antenna. Further, when determining that a change value of state information of the second antenna is less than a second threshold, the communication apparatus may determine that the second antenna is in a "static state". To be specific, a change amplitude of the second antenna is less than an error value output by a sensor that is in a static state and that is connected to the second antenna. The second threshold may be the same as the first threshold, or may be different from the first threshold. A specific value of the second threshold should not be construed as any limitation on this solution. Finally, when the beam angle of the first antenna is a different angle, the communication apparatus separately obtains the receive power of the first antenna and the transmit power of the second antenna, determines first target state information, and adjusts beam state information of the first antenna based on the first target state information.

In this implementation, when the change value of the state information of the first antenna is less than the first threshold, and the change value of the state information of the second antenna is less than the second threshold, the first target state information is determined based on the receive power of the first antenna and the transmit power of the second antenna, and the first target state information is used to adjust the beam state information of the first antenna. The state information includes any one or more of a direction, an amplitude, and an angular velocity of the antenna. Because state information with a good system gain may be determined based on the receive power of the first antenna and the transmit power of the second antenna, the determined first target state information can indicate state information with an optimal gain. In this way, accuracy of beam adjustment is improved, and therefore, accuracy of beam tracking is improved.

In an implementation of this embodiment of this application, the communication apparatus obtains any one or more of the direction, the amplitude, and the angular velocity corresponding to the first antenna based on the sensor connected to the first antenna. Specifically, the communication apparatus may adjust the beam angle of the first antenna, and obtain the state information of the first antenna each time the communication apparatus adjusts the beam angle. A specific preset period is not limited herein. Then, it is determined, based on any one or more of the direction, the amplitude, and the angular velocity corresponding to the first antenna, that the change value of the state information of the first antenna is less than the first threshold. A specific determining manner is already described in the foregoing implementation, and details are not described herein again.

In this implementation, the beam angle of the first antenna is adjusted, and the state information corresponding to the first antenna is obtained. It may be determined, based on the state information, that the change value of the state information of the first antenna is less than the first threshold during adjustment of the beam angle. In this way, feasibility of this solution can be improved.

In an implementation of this embodiment of this application, when the beam angle of the first antenna is an initial beam angle, a first receive power of the first antenna and a first transmit power of the second antenna are obtained. Then, when the beam angle of the first antenna is adjusted from the initial beam angle to a first angle, a second receive power of the first antenna and a second transmit power of the second antenna are obtained. The first angle is a sum of a preset adjustment angle and the initial beam angle, and there is a correspondence between the preset adjustment angle, the first receive power, and the first transmit power. Next, when the beam angle of the first antenna is adjusted from the first angle to the initial beam angle, a third receive power of the first antenna and a third transmit power of the second antenna are obtained. Further, when the beam angle of the first antenna is adjusted from the initial beam angle to a second angle, a fourth receive power of the first antenna and a fourth transmit power corresponding to the second antenna are obtained. The second angle is a difference between the preset adjustment angle and the initial beam angle. Finally, when the beam angle of the first antenna is adjusted from the second angle to the initial beam angle, a fifth receive power of the first antenna and a fifth transmit power of the second antenna are obtained.

In this implementation, the beam angle of the first antenna is regularly and periodically adjusted, to obtain a receive power of the first antenna and a transmit power of the second antenna at each different beam angle. In this way, an optimal system gain can be subsequently determined, to improve feasibility of this solution.

In an implementation of this embodiment of this application, the communication apparatus determines, in two manners, that the change value of the state information of the second antenna is less than the second threshold. Specifically, in one manner, when the beam angle of the first antenna is a different angle, the communication apparatus separately obtains the receive power of the first antenna and the transmit power of the second antenna. Therefore, the communication apparatus may determine, based on the receive power of the first antenna and the transmit power of the second antenna, that the change value of the state information of the second antenna is less than the second threshold. To be specific, the communication apparatus determines a difference between gains corresponding to changes of the beam angle when the first antenna is subject to the initial beam angle twice adjacently, where the difference is less than the second threshold; and therefore may determine that the change value of the state information of the second antenna is less than the second threshold. In the other manner, the communication apparatus obtains the state information of the second antenna, and determines, based on the state information of the second antenna, that the change value of the state information of the second antenna is less than the second threshold. Specifically, the communication apparatus needs to obtain any one or more of a direction, an amplitude, and an angular velocity corresponding to the second antenna by using the sensor connected to the second antenna. Then, the communication apparatus obtains any one or more of the direction, the amplitude, and the angular velocity corresponding to the second antenna through a spatial link, and determines that the change value of the state information of the second antenna is less than the second threshold in a manner similar to that of determining that the change value of the state information of the first antenna is less than the first threshold in the foregoing embodiment. Details are not described herein again.

In this implementation, the communication apparatus may determine, by using the receive power and the transmit power, that the change value of the state information of the second antenna is less than the second threshold, so that accuracy of this solution can be improved. Alternatively, determining may be performed by obtaining the state information of the second antenna. This is similar to the foregoing implementation method, and can further improve the accuracy of this solution. In addition, because it may be determined in the two manners that the change value of the state information of the second antenna is less than the second threshold, flexibility of this solution can be further improved.

In an implementation of this embodiment of this application, the communication apparatus determines a first gain based on the first receive power and the first transmit power, determines a second gain based on the third receive power and the third transmit power, and then determines a third gain based on the fifth receive power and the fifth transmit power. When a difference between the first gain and the second gain is less than the second threshold and a difference between the second gain and the third gain is less than the second threshold, the change value of the state information of the second antenna is less than the second threshold.

In this implementation, in a process of adjusting the beam angle of the first antenna, when the beam angle is the initial beam angle, the change value of the state information of the first antenna is small. Therefore, when an obtained difference between the receive power and the transmit power is small, it may indicate that the change value of the state information of the second antenna is small. Therefore, when differences between a plurality of gains are less than the second threshold, it may be determined that the change value of the state information of the second antenna is less than the second threshold. In this way, accuracy and feasibility of this solution are improved.

In an implementation of this embodiment of this application, the communication apparatus determines a fourth gain based on the second receive power and the second transmit power, where the fourth gain is a system gain corresponding to a positive offset of the beam angle; and determines a fifth gain based on the fourth receive power and the fourth transmit power, where the fifth gain is a system gain corresponding to a negative offset of the beam angle. Then, the gain corresponding to the positive offset of the beam angle is compared with the gain corresponding to the negative offset of the beam angle, to adjust the beam angle to optimize the system gain. Specifically, the larger one of the fourth gain and the fifth gain is determined, state information corresponding to the larger one is determined as the first target state information, and an amplitude included in the first target state information is the preset adjustment angle. Then, the beam state information of the first antenna may be adjusted based on the first target state information.

In this implementation, because state information with a good system gain may be determined based on the receive power of the first antenna and the transmit power of the second antenna, the determined first target state information can indicate state information with an optimal gain. In this way, accuracy of beam adjustment is improved, and therefore, accuracy of beam tracking is improved.

In an implementation of this embodiment of this application, the communication apparatus obtains any one or more of the direction, the amplitude, and the angular velocity corresponding to the first antenna based on the sensor connected to the first antenna. Specifically, the communication apparatus may adjust the beam angle of the first antenna within a preset period, and obtain the state information of the first antenna each time the communication apparatus adjusts the beam angle. A specific preset period is not limited herein. Because the communication apparatus adjusts the beam angle of the first antenna for a plurality of times, a change of the state information of the first antenna when the beam angle is adjusted within the preset period may be obtained through calculation processing. Then, the change value of the state information of the first antenna is compared with the first threshold. When the change value of the state information of the first antenna is greater than or equal to the first threshold, it may be determined that the first antenna is not in the "static state". To be specific, a change amplitude of the first antenna is greater than an error value output by the sensor that is in the static state and that is connected to the first antenna. Further, because the state information of the first antenna includes the direction, a direction opposite to a direction of the change of the state information is determined as a direction included in second target state information. Then, the beam state information of the first antenna may be adjusted based on the second target state information. Specifically, for example, a method for adjusting the beam state information of the first antenna includes but is not limited to adjusting an angle of the first antenna, or adjusting a secondary reflector or a primary reflector of the first antenna by using a motor included in the first antenna or in another driving manner, or adjusting a phase of a phased antenna. A specific manner of adjusting the beam state information of the first antenna is not limited herein.

In this implementation, when the change value of the state information of the first antenna is less than the first threshold, that is, the first antenna is in a changing state, the second target state information is determined by using the change value of the state information of the first antenna. In this way, accuracy of beam adjustment when an antenna is in a changing state can be improved, and feasibility of this embodiment of this application can be improved.

A second aspect of embodiments of this application provides a communication apparatus. The communication apparatus includes: a determining module, configured to determine that a change value of state information of a first antenna is less than a first threshold, where the state information includes any one or more of a direction, an amplitude, and an angular velocity of the antenna; and an obtaining module, configured to obtain a receive power of the first antenna and a transmit power of a second antenna. The determining module is further configured to determine that a change value of state information of the second antenna is less than a second threshold. The determining module is further configured to determine first target state information based on the receive power of the first antenna and the transmit power of the second antenna. The first target state information is used to adjust beam state information of the first antenna.

In an implementation of this embodiment of this application, the determining module is specifically configured to: obtain the state information of the first antenna; and
determine, based on the state information of the first antenna, that the change value of the state information of the first antenna is less than the first threshold.

In an implementation of this embodiment of this application, the obtaining module is specifically configured to: obtain a first receive power of the first antenna and a first transmit power of the second antenna when a beam angle of the first antenna is an initial beam angle;
obtain a second receive power of the first antenna and a second transmit power of the second antenna when the beam angle of the first antenna is a first angle, where the first angle is a sum of a preset adjustment angle and the initial beam angle, and there is a correspondence between the preset adjustment angle, the first receive power, and the first transmit power;
obtain a third receive power of the first antenna and a third transmit power of the second antenna when the beam angle of the first antenna is the initial beam angle;
obtain a fourth receive power of the first antenna and a fourth transmit power corresponding to the second antenna when the beam angle of the first antenna is a second angle, where the second angle is a difference between the preset adjustment angle and the initial beam angle; and
obtain a fifth receive power of the first antenna and a fifth transmit power of the second antenna when the beam angle of the first antenna is the initial beam angle.

In an implementation of this embodiment of this application, the determining module is specifically configured to: determine, based on the receive power of the first antenna and the transmit power of the second antenna, that the change value of the state information of the second antenna is less than the second threshold; or
obtain the state information of the second antenna; and
determine, based on the state information of the second antenna, that the change value of the state information of the second antenna is less than the second threshold.

In an implementation of this embodiment of this application, the determining module is specifically configured to: determine a first gain based on the first receive power and the first transmit power;
determine a second gain based on the third receive power and the third transmit power;
determine a third gain based on the fifth receive power and the fifth transmit power; and
determine, when a difference between the first gain and the second gain is less than the second threshold and a difference between the second gain and the third gain is less than the second threshold, that the change value of the state information of the second antenna is less than the second threshold.

In an implementation of this embodiment of this application, the determining module is specifically configured to: determine a fourth gain based on the second receive power and the second transmit power;
determine a fifth gain based on the fourth receive power and the fourth transmit power; and
determine state information corresponding to the larger one of the fourth gain and the fifth gain as the first target state information.

In an implementation of this embodiment of this application, the obtaining module is further configured to obtain the state information of the first antenna.

The determining module is further configured to determine, based on the state information of the first antenna, that the change value of the state information of the first antenna is greater than or equal to the first threshold.

The determining module is further configured to determine second target state information based on the change value of the state information of the first antenna. The second target state information is used to adjust the beam state information of the first antenna.

A third aspect of embodiments of this application provides a program. When being executed by a processor, the program is used to perform the method according to any one of the first aspect and the possible implementations of the first aspect.

A fourth aspect of embodiments of this application provides a computer program product (or referred to as a computer program) storing one or more computers. When the computer program product is executed by a processor, the processor performs the method according to any one of the first aspect or the possible implementations of the first aspect.

A fifth aspect of embodiments of this application provides a chip. The chip includes at least one processor, configured to support a terminal device in implementing a function according to any one of the first aspect or the possible implementations of the first aspect. In a possible design, the chip system may further include a memory. The at least one processor is communicatively connected to at least one memory. The at least one memory stores instructions, and is configured to store program instructions and data that are necessary for the terminal device and a server. Optionally, the chip system further includes an interface circuit, and the interface circuit provides the program instructions and/or the data for the at least one processor.

A sixth aspect of embodiments of this application provides a computer-readable storage medium. The computer-readable storage medium stores a program, and the program enables a terminal device to perform the method according to any one of the first aspect and the possible implementations of the first aspect.

It should be noted that advantageous effects brought by the implementations of the second aspect to the sixth aspect of this application and descriptions of the implementations of the aspects may be understood with reference to the implementations of the first aspect. Therefore, details are not described.

According to the technical solutions provided in this application, when a change value of state information of a first antenna is less than a first threshold, and a change value of state information of a second antenna is less than a second threshold, first target state information is determined based on a receive power of the first antenna and a transmit power of the second antenna, and the first target state information is used to adjust beam state information of the first antenna. The state information includes any one or more of a direction, an amplitude, and an angular velocity of the antenna. Because state information with a good system gain may be determined based on the receive power of the first antenna and the transmit power of the second antenna, the determined first target state information can indicate state information with an optimal gain. In this way, accuracy of beam adjustment is improved, and therefore, accuracy of beam tracking is improved.

### BRIEF DESCRIPTION OF DRAWINGS

FIG. 1 is a schematic diagram of a system architecture of a communication system according to an embodiment of this application;
FIG. 2 is a schematic diagram of an embodiment of a communication method according to an embodiment of this application;
FIG. 3A and FIG. 3B are a schematic diagram of another embodiment of a communication method according to an embodiment of this application;
FIG. 4 is a schematic diagram of another embodiment of a communication method according to an embodiment of this application;
FIG. 5 is a schematic diagram of an embodiment of a communication apparatus according to an embodiment of this application; and
FIG. 6 is a schematic diagram of a structure of an embodiment of a communication apparatus according to an embodiment of this application.

### DESCRIPTION OF EMBODIMENTS

Embodiments of this application provide a communication method, system, and apparatus, to improve accuracy of beam adjustment, and further improve accuracy of beam tracking.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances, so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It should be understood that names of all nodes and messages in this application are merely names set for ease of description in this application, and may be different in an actual network. It should not be understood that the names of all the nodes and the messages are limited in this application. On the contrary, any name that has a function that is the same as or similar to that of the node or the message used in this application is considered as a method or an equivalent replacement in this application, and falls within the protection scope of this application. Details are not described below again.

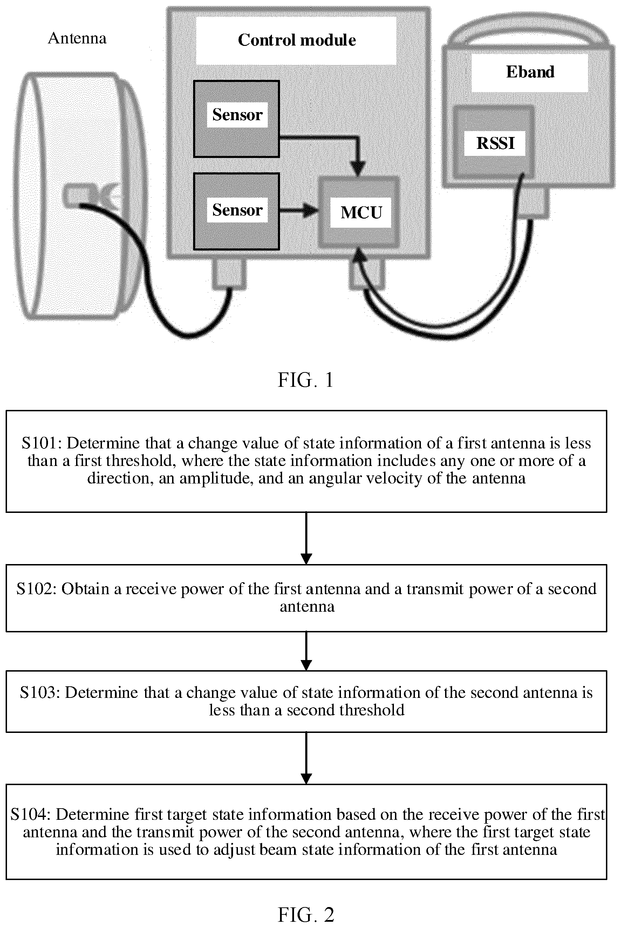

To better understand a communication method and a related apparatus that are disclosed in embodiments of this application, the following first describe an architecture of a communication system used in embodiments of the present invention. FIG. 1 is a schematic diagram of a system architecture of a communication system according to an embodiment of this application. As shown in the figure, the communication system includes an E-band transceiver device, a control module, and an antenna. The antenna may be a Cassegrain antenna (Cassegrain antenna) with an adjustable secondary reflector using a motor, or may be a Cassegrain antenna with an adjustable secondary reflector using a radio frequency switch, or may be a phased antenna (a phase-controlled electronically scanned antenna). For example, in this embodiment of this application, the E-band transceiver device is configured to obtain a received signal level (received signal level, RSL) and a transmitted signal level (transmitted signal level, TSL). In addition, the E-band transceiver device may determine signal strength (received signal strength indications, RSSIs) of the RSL and the TSL. Then, the E-band transceiver device transmits a receive power RSL and an RSSI of a local device to a microcontroller unit (microcontroller unit, MCU) in the control module through a cable, and transmits a transmit power TSL of the local device to a peer device through a spatial link. For ease of understanding and description, in embodiments of this application, the RSL is defined as a receive power, and the TSL is defined as a transmit power. This should not be construed as any limitation on this application. In addition, the control module obtains state information of the antenna by using sensors such as an accelerometer and a gyroscope, determines target state information in a manner of determining the state information according to this embodiment of this application, and then drives the motor in the Cassegrain antenna by using a gyroscope sensor. The motor is configured to adjust the secondary reflector based on the determined target state information, to adjust a beam angle. It may be understood that the schematic diagram of the system architecture shown in FIG. 1 is merely used for understanding this solution. The control module is connected to the antenna. The control module may be directly deployed in the Cassegrain antenna, or may be externally mounted outside the Cassegrain antenna, or may be deployed in the E-band transceiver device. A specific location of the control module is not limited in this embodiment.

For example, when the sensor determines that a change value of the state information of the Cassegrain antenna is less than an error value output by the sensor in a static state, the beam angle of the antenna is adjusted within a range of a preset beam angle, and the beam angle of the antenna, the receive power RSL of the local device, and a transmit power TSL of the peer device in an adjustment process are recorded. The receive power RSL is subtracted from the TSL of the peer device to obtain a system gain of a link (where the system gain does not include the antenna gains), and a correspondence between the beam angle of the antenna and the system gain is established. In this way, state information corresponding to an optimal system gain is determined, so that the motor in the Cassegrain antenna performs adjustment based on the state information.

For example, the sensor in this embodiment of this application may be a gyroscope or an accelerometer. It may be understood that during actual application, the sensor may further include but is not limited to an apparatus, such as a magnetometer, an electronic compass, a magnetic encoder, an optical encoder, an electronic compass, or a laser displacement detector, that can sense a location of the antenna or an offset of the beam angle. This is not specifically limited herein.

The following describes in detail a communication method according to an embodiment of this application. FIG. 2 is a schematic diagram of an embodiment of a communication method according to an embodiment of this application. As shown in the figure, the communication method includes the following steps.

S 101: Determine that a change value of state information of a first antenna is less than a first threshold, where the state information includes any one or more of a direction, an amplitude, and an angular velocity of the antenna.

In this embodiment, because a communication apparatus adjusts a beam angle of the first antenna for a plurality of times, a change of the state information of the first antenna when the beam angle is adjusted within a preset period may be obtained through calculation processing. Then, the change value of the state information of the first antenna is compared with the first threshold. When the change value of the state information of the first antenna is less than the first threshold, it may be determined that the first antenna is in a "static state". To be specific, a change amplitude of the first antenna is less than an error value output by a sensor that is in a "static state" and that is connected to the first antenna. It should be understood that the first threshold described in this embodiment should be greater than or equal to the error value output by the sensor that is in the static state and that is connected to the first antenna, and details are not described again in subsequent steps. For example, an example in which the state information is the direction, the amplitude, and the angular velocity of the first antenna is used for description. According to Radian = Angular velocity * Time, it is determined whether the change value of the state information is less than the first threshold. In other words, a change value of a radian of the first antenna needs to be compared with the first threshold. Further, an example in which the first threshold is 0.01 degree (°)/30 minutes (min) is used for description. If the sensor obtains the amplitude of the first antenna every 1 min within 30 min, and a difference between a maximum value and a minimum value among all amplitudes corresponding to the first antenna within 30 min is 0.005°, and because 0.005° is less than 0.01°, it may be determined that a change value of the radian of the first antenna within 30 min is less than the first threshold.

It should be understood that the foregoing example is merely used for understanding this solution. A specific change value of the state information of the first antenna is flexibly determined based on an actual status of the state information of the first antenna, and the first threshold also needs to be flexibly determined based on an actual requirement.

S102: Obtain a receive power of the first antenna and a transmit power of a second antenna.

In this embodiment, when the beam angle of the first antenna is a different angle, the communication apparatus separately obtains the receive power of the first antenna and the transmit power of the second antenna. Specifically, a control module included in the communication apparatus may obtain a receive power RSL of an E-band transceiver device in the communication apparatus through a wired connection such as a serial port, a coaxial cable, a universal serial bus (universal serial bus, USB), or board cabling, or may obtain the receive power of the E-band transceiver device in the communication apparatus through a wireless connection such as a wireless network (wireless-fidelity, Wi-Fi) or Bluetooth (Bluetooth). In addition, the control module included in the communication apparatus receives the transmit power of the second antenna through a spatial link.

It should be understood that the receive power such as a first receive power or a second receive power described in this embodiment of this application is obtained in the foregoing manner. In addition, the transmit power such as a first transmit power or a second transmit power described in this embodiment is obtained in the foregoing manner. Details are not described subsequently again.

S103: Determine that a change value of state information of the second antenna is less than a second threshold.

In this embodiment, when determining that the change value of the state information of the second antenna is less than the second threshold, the communication apparatus may determine that the second antenna is in a "static state". To be specific, a change amplitude of the second antenna is less than an error value output by a sensor that is in a static state and that is connected to the second antenna. It should be understood that the second threshold described in this embodiment should be greater than or equal to the error value output by the sensor that is in the static state and that is connected to the second antenna, and details are not described again in subsequent steps. In addition, the second threshold may be the same as the first threshold in step S101, or may be different from the first threshold in step S 101. A specific value of the second threshold should not be construed as any limitation on this solution.

Specifically, in this embodiment, two manners may be used to determine that the change value of the state information of the second antenna is less than the second threshold. The following separately describes the two manners.

In one manner, when the beam angle of the first antenna is a different angle, the communication apparatus separately obtains the receive power of the first antenna and the transmit power of the second antenna. Therefore, the communication apparatus may determine, based on the receive power of the first antenna and the transmit power of the second antenna, that the change value of the state information of the second antenna is less than the second threshold. To be specific, the communication apparatus determines a difference between gains corresponding to changes of the beam angle when the first antenna is subject to the initial beam angle twice adjacently, where the difference is less than the second threshold; and therefore may determine that the change value of the state information of the second antenna is less than the second threshold.

In the other manner, the communication apparatus obtains the state information of the second antenna, and determines, based on the state information of the second antenna, that the change value of the state information of the second antenna is less than the second threshold. Specifically, the communication apparatus needs to obtain any one or more of a direction, an amplitude, and an angular velocity corresponding to the second antenna by using the sensor connected to the second antenna. Then, the communication apparatus obtains any one or more of the direction, the amplitude, and the angular velocity corresponding to the second antenna through a spatial link, and determines that the change value of the state information of the second antenna is less than the second threshold in a manner similar to that of determining that the change value of the state information of the first antenna is less than the first threshold in step S101. Details are not described herein again.

It should be understood that if the change value of the state information of the second antenna is greater than or equal to the second threshold, it is considered that a status of an air interface link changes. For example, a system gain changes due to a factor such as rain attenuation. That is, it is determined that the second antenna is not in the "static state", and subsequent steps are not performed herein.

S104: Determine first target state information based on the receive power of the first antenna and the transmit power of the second antenna, where the first target state information is used to adjust beam state information of the first antenna.

In this embodiment, when the beam angle of the first antenna is a different angle, the communication apparatus separately obtains the receive power of the first antenna and the transmit power of the second antenna, determines the first target state information, and adjusts the beam state information of the first antenna based on the first target state information.

Specifically, for example, a method for adjusting the beam state information of the first antenna includes but is not limited to: adjusting an angle of the first antenna, or adjusting a secondary reflector or a primary reflector of the first antenna, or adjusting a phase of a phased antenna. A specific manner of adjusting the beam state information of the first antenna is not limited herein. For example, the state information of the antenna may be adjusted by using a motor of the first antenna or in another driving manner.

In this embodiment, because state information with a good system gain may be determined based on the receive power of the first antenna and the transmit power of the second antenna, the determined first target state information can indicate state information with an optimal gain. In this way, accuracy of beam adjustment is improved, and therefore, accuracy of beam tracking is improved.

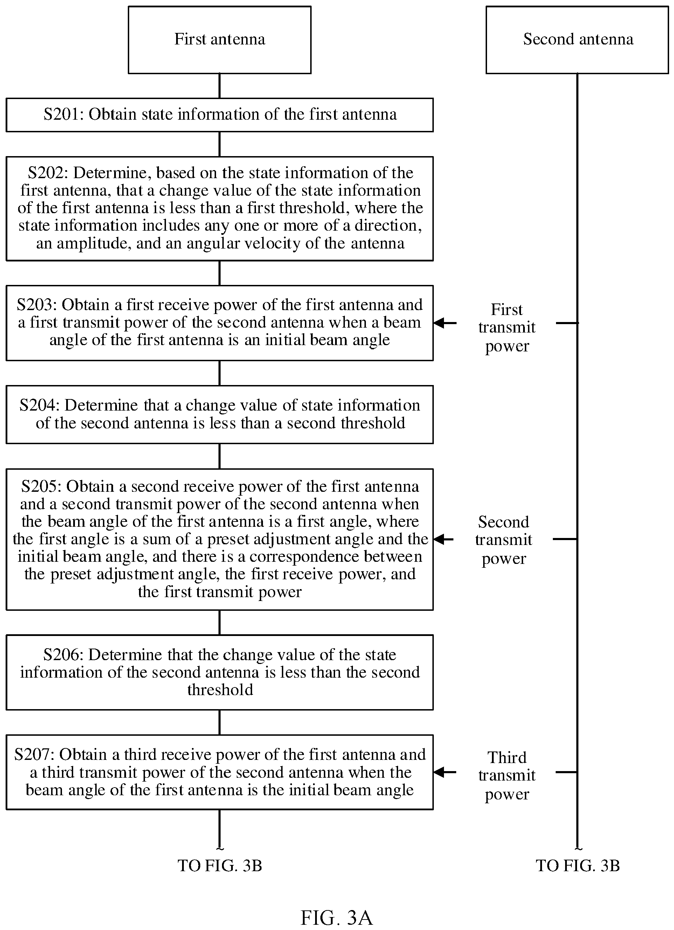

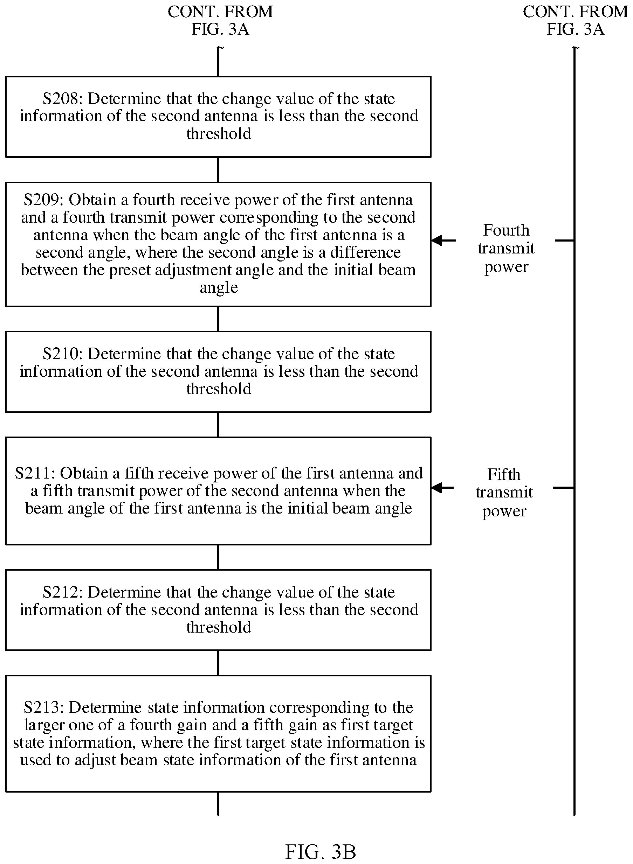

Further, the following describes in detail a communication method according to an embodiment of this application. FIG. 3A and FIG. 3B are a schematic diagram of another embodiment of a communication method according to an embodiment of this application. As shown in the figure, the communication method includes the following steps.

S201: Obtain state information of a first antenna.

In this embodiment, a communication apparatus obtains any one or more of a direction, an amplitude, and an angular velocity corresponding to the first antenna based on a sensor connected to the first antenna. Specifically, the communication apparatus may adjust a beam angle of the first antenna, and obtain the state information of the first antenna each time the communication apparatus adjusts the beam angle.

S202: Determine, based on the state information of the first antenna, that a change value of the state information of the first antenna is less than a first threshold, where the state information includes any one or more of the direction, the amplitude, and the angular velocity of the antenna.

In this embodiment, a manner in which the communication apparatus determines, based on the state information of the first antenna, that the change value of the state information of the first antenna is less than the first threshold is similar to that in step S101, and details are not described herein again.

S203: Obtain a first receive power of the first antenna and a first transmit power of a second antenna when the beam angle of the first antenna is an initial beam angle.

In this embodiment, when the beam angle of the first antenna is the initial beam angle, the communication apparatus obtains a first receive power RSL 1 in the manner described in the foregoing embodiment, and obtains a first transmit power TSL 1 of the second antenna in the manner described in the foregoing embodiment. The initial beam angle is a beam angle of the first antenna when it is determined that the first antenna is in a "static state". A specific manner of obtaining a receive power and a transmit power is similar to that in step S102, and details are not described herein again.

S204: Determine that a change value of state information of the second antenna is less than a second threshold.

In this embodiment, a manner in which the communication apparatus determines that the change value of the state information of the second antenna is less than the second threshold is similar to that in step S103, and details are not described herein again.

S205: Obtain a second receive power of the first antenna and a second transmit power of the second antenna when the beam angle of the first antenna is a first angle, where the first angle is a sum of a preset adjustment angle and the initial beam angle, and there is a correspondence between the preset adjustment angle, the first receive power, and the first transmit power.

In this embodiment, the preset adjustment angle having the correspondence with the first transmit power and the first receive power is determined based on the first transmit power and the first receive power. Then, the communication apparatus adjusts the beam angle of the first antenna from the initial beam angle to the first angle (the sum of the preset adjustment angle and the initial beam angle), and obtains a second receive power RSL 2 of the first antenna and a second transmit power TSL 2 of the second antenna in a manner similar to that described in step S102. Specific steps are not described herein again.

Specifically, in this embodiment, the preset adjustment angle falls within a preset range. If a preset adjustment angle for a beam disturbance is excessively large, a receive power RSL may deteriorate. Therefore, in this embodiment, a maximum value of the preset adjustment angle is set to be less than a half-power angle (a 3 dB power angle). However, if the preset adjustment angle for the beam disturbance is excessively small, an obtained change of a system gain is too small to accurately determine a beam adjustment angle. Therefore, in this embodiment, a range of the preset adjustment angle is 1/8 of the half-power angle (a 3/8 dB power angle) to the half-power angle (the 3 dB power angle). For ease of understanding, in this embodiment, an example in which the preset adjustment angle is 1/5 time a high power angle (0.25°) is used for further description. That is, the preset adjustment angle is 0.05°. However, during actual application, the preset adjustment angle may be another angle value. This is not specifically limited herein.

For example, an example in which the initial beam angle is 0° and the preset adjustment angle is 0.05° is used for description. In this case, the first angle is 0.05°. To be specific, the first antenna needs to adjust the beam angle of the first antenna to 0.05°, and then obtain the second receive power RSL 2 of the first antenna and the second transmit power TSL 2 of the second antenna in this case.

S206: Determine that the change value of the state information of the second antenna is less than the second threshold.

In this embodiment, after obtaining the second receive power of the first antenna and the second transmit power of the second antenna, the communication apparatus needs to continue to determine whether the change value of the state information of the second antenna is less than the second threshold. A specific determining manner is similar to that in step S102, and details are not described herein again.

S207: Obtain a third receive power of the first antenna and a third transmit power of the second antenna when the beam angle of the first antenna is the initial beam angle.

In this embodiment, the communication apparatus adjusts the beam angle of the first antenna from the first angle to the initial beam angle, and obtains a third receive power RSL 3 of the first antenna and a third transmit power TSL 3 of the second antenna in a manner similar to that described in step S102. Specific steps are not described herein again.

For example, an example in which the initial beam angle is 0° and the preset adjustment angle is 0.05° is used again for description. In this case, the first antenna needs to adjust the beam angle of the first antenna from 0.05° to 0°, and then obtains the third receive power RSL 3 of the first antenna and the third transmit power TSL 3 of the second antenna in this case.

S208: Determine that the change value of the state information of the second antenna is less than the second threshold.

In this embodiment, after obtaining the third receive power of the first antenna and the third transmit power of the second antenna, the communication apparatus needs to continue to determine whether the change value of the state information of the second antenna is less than the second threshold. When the change value of the state information of the second antenna is less than the second threshold, it may be determined that when the beam angle of the first antenna is the initial beam angle, a change amplitude of the second antenna is less than an error value output by a sensor that is in a static state and that is connected to the second antenna. A manner in which the communication apparatus determines that the change value of the state information of the second antenna is less than the second threshold is similar to that in step S103, and details are not described herein again.

S209: Obtain a fourth receive power of the first antenna and a fourth transmit power corresponding to the second antenna when the beam angle of the first antenna is a second angle, where the second angle is a difference between the preset adjustment angle and the initial beam angle.

In this embodiment, the communication apparatus adjusts the beam angle of the first antenna from the initial beam angle to the second angle (the difference between the preset adjustment angle and the initial beam angle), and obtains a fourth receive power RSL 4 of the first antenna and a fourth transmit power TSL 4 of the second antenna in a manner similar to that described in step S102. Specific steps are not described herein again.

For example, an example in which the initial beam angle is 0° and the preset adjustment angle is 0.05° is used again for description. In this case, the first antenna needs to adjust the beam angle of the first antenna from 0° to -0.05°, and then obtains the fourth receive power RSL 4 of the first antenna and the fourth transmit power TSL 4 of the second antenna in this case.

S210: Determine that the change value of the state information of the second antenna is less than the second threshold.

In this embodiment, after obtaining the fourth receive power of the first antenna and the fourth transmit power of the fourth antenna, the communication apparatus needs to continue to determine whether the change value of the state information of the second antenna is less than the second threshold. A specific determining manner is similar to that in step S103, and details are not described herein again.

S211: Obtain a fifth receive power of the first antenna and a fifth transmit power of the second antenna when the beam angle of the first antenna is the initial beam angle.

In this embodiment, the communication apparatus adjusts the beam angle of the first antenna from the second angle to the initial beam angle, and obtains a fifth receive power RSL 5 of the first antenna and a fifth transmit power TSL 5 of the second antenna in a manner similar to that described in step S102. Specific steps are not described herein again.

For example, an example in which the initial beam angle is 0° and the preset adjustment angle is 0.05° is used again for description. In this case, the first antenna needs to adjust the beam angle of the first antenna from - 0.05° to 0°, and then obtains the fifth receive power RSL 5 of the first antenna and the fifth transmit power TSL 5 of the second antenna in this case.

S212: Determine that the change value of the state information of the second antenna is less than the second threshold.

In this embodiment, after obtaining the fifth receive power of the first antenna and the fifth transmit power of the fourth antenna, the communication apparatus needs to continue to determine whether the change value of the state information of the second antenna is less than the second threshold. A specific determining manner is similar to that in step S103, and details are not described herein again.

S213: Determine state information corresponding to the larger one of a fourth gain and a fifth gain as first target state information, where the first target state information is used to adjust beam state information of the first antenna.

In this embodiment, the communication apparatus determines the fourth gainbased on the second receive power and the second transmit power, where the fourth gain is a system gain corresponding to a positive offset of the beam angle; and determines the fifth gain based on the fourth receive power and the fourth transmit power, where the fifth gain is a system gain corresponding to a negative offset of the beam angle. The positive offset is an angle offset of the first antenna obtained by adjusting the beam angle from the initial beam angle to the first angle. Because the first angle is the sum of the preset adjustment angle and the initial beam angle, the positive offset is to offset in a direction of increasing the beam angle. In addition, the negative offset is an angle offset of the first antenna obtained by adjusting the beam angle from the initial beam angle to the second angle. Because the second angle is the difference between the preset adjustment angle and the initial beam angle, the negative offset is to offset in a direction of decreasing the beam angle. Then, the gain corresponding to the positive offset of the beam angle is compared with the gain corresponding to the negative offset of the beam angle. A larger gain indicates that the system gain is more optimized in a case of adjusting to a corresponding angle. Therefore, the beam angle can be adjusted to further optimize the system gain. Specifically, the larger one of the fourth gain and the fifth gain is determined, the state information corresponding to the larger one is determined as the first target state information, and an amplitude included in the first target state information is the preset adjustment angle. Then, the beam state information of the first antenna may be adjusted based on the first target state information.

In this embodiment, because state information with a good system gain may be determined based on the receive power of the first antenna and the transmit power of the second antenna, the determined first target state information can indicate state information with an optimal gain. In this way, accuracy of beam adjustment is improved, and therefore, accuracy of beam tracking is improved.

Optionally, in most cases, a transmit power sent by the second antenna is stable. To be specific, when the first transmit power, the second transmit power, the third transmit power, the fourth transmit power, and the fifth transmit power are the same, the first transmit power, the second transmit power, the third transmit power, the fourth transmit power, or the fifth transmit power may be considered as a constant. That is, the communication apparatus may determine, by using receive powers and constants (transmit powers) corresponding to different beam angles of the first antenna, target state information corresponding to an optimal receive power as the first target state information, to reduce system complexity. It should be understood that this embodiment is applied to a scenario in which the transmit power of the second antenna is stable. In a scenario in which the transmit power of the second antenna is increased due to adaptive modulation (adaptive modulation, AM) downshift, or the transmit power fluctuates due to a fault of the second antenna, the method described in this embodiment is not used. In this embodiment, a gain needs to be determined based on a difference between a receive power and a transmit power, and the transmit power is considered as a constant, so that a data calculation amount can be reduced, and therefore, efficiency of determining the first target state information is improved.

Optionally, the communication apparatus may further perform the method in step S203 to step S212 for a plurality of times, determine a plurality of preset adjustment angles with optimal system gains by adjusting the beam angle for a plurality of times, determine, from the plurality of preset adjustment angles, a preset adjustment angle consistent with a current deflection direction of the beam angle, determine the preset adjustment angle as an amplitude included in the first target state information, and adjust the beam state information of the first antenna based on the first target state information, to improve system reliability. In this embodiment, the beam angle is adjusted for a plurality of times, so that an obtained gain is more accurate. In this way, accuracy of the first target state information determined based on the gain can also be improved, and therefore, accuracy of beam adjustment is improved.

Optionally, the foregoing embodiment describes only a manner of adjusting the initial beam angle to the first angle, adjusting the first angle to the initial beam angle, adjusting the initial beam angle to the second angle, adjusting the initial beam angle back to the initial beam angle, and obtaining receive powers and transmit powers corresponding to different angles.

In this embodiment, the preset adjustment angle may be further refined. An example in which the initial beam angle is 0° and the preset adjustment angle is 0.05° is used again. First, a receive power and a transmit power corresponding to the initial beam angle 0° are obtained. Then, the beam angle is adjusted to 1/5 of the preset adjustment angle, that is, adjusted to 0.01°, and then a receive power and a transmit power corresponding to 1/5 of the preset adjustment angle are obtained. Then, the beam angle is adjusted to 2/5 of the preset adjustment angle, that is, adjusted from 0.01° to 0.02°, and then a receive power and a transmit power corresponding to 2/5 of the preset adjustment angle are obtained. Then, the beam angle is adjusted to 3/5 of the preset adjustment angle, that is, adjusted from 0.02° to 0.03°, and then a receive power and a transmit power corresponding to 3/5 of the preset adjustment angle are obtained. Then, the beam angle is adjusted to 4/5 of the preset adjustment angle, that is, adjusted from 0.03° to 0.04°, and then a receive power and a transmit power corresponding to 4/5 of the preset adjustment angle are obtained. Finally, the beam angle is adjusted to the preset adjustment angle, that is, adjusted from 0.04° to 0.05°, and then a receive power and a transmit power corresponding to the preset adjustment angle are obtained, and so on.

Similarly, after a plurality of receive powers and a plurality of transmit powers are obtained, a gain in an angle disturbance change process is calculated, a correspondence between a plurality of beam angles and corresponding gains is established, a preset adjustment angle corresponding to an optimal system gain is found and determined by using the correspondence, and then the first target state information is determined in a manner similar to that in step S213. In this embodiment, because refined division is performed on the preset adjustment angle, a fineness of the preset adjustment angle may be increased, and therefore, accuracy of the gain is improved, and accuracy of the determined first target state information is improved.

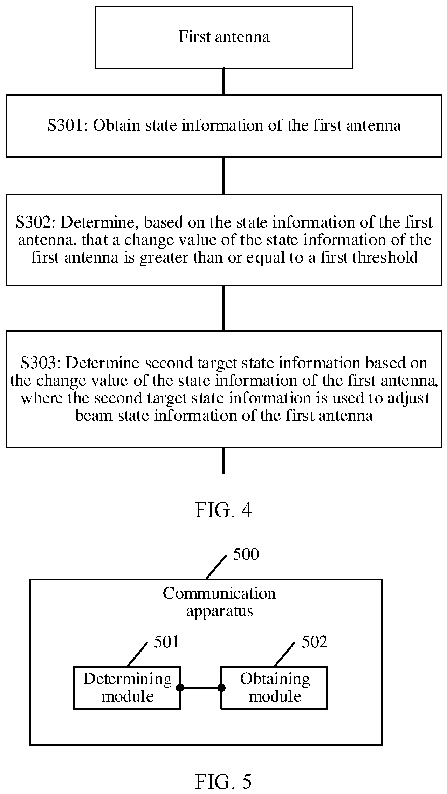

In addition, when the change value of the state information of the first antenna is less than the first threshold, the state information may also be determined. The following describes a communication method in this case in detail. FIG. 4 is a schematic diagram of another embodiment of a communication method according to an embodiment of this application. As shown in the figure, the communication method includes the following steps.

S301: Obtain state information of a first antenna.

In this embodiment, a communication apparatus obtains any one or more of a direction, an amplitude, and an angular velocity corresponding to the first antenna based on a sensor connected to the first antenna. Specifically, the communication apparatus may adjust a beam angle of the first antenna within a preset period, and obtain the state information of the first antenna each time the communication apparatus adjusts the beam angle. A specific preset period is not limited herein.

S302: Determine, based on the state information of the first antenna, that a change value of the state information of the first antenna is greater than or equal to a first threshold.

In this embodiment, because the communication apparatus adjusts the beam angle of the first antenna for a plurality of times, a change of the state information of the first antenna when the beam angle is adjusted within a preset period may be obtained through calculation processing. Then, the change value of the state information of the first antenna is compared with the first threshold. When the change value of the state information of the first antenna is greater than or equal to the first threshold, it may be determined that the first antenna is not in a "static state". To be specific, a change amplitude of the first antenna is greater than an error value output by the sensor that is in a static state and that is connected to the first antenna.

For example, an example in which the state information is the direction, the amplitude, and the angular velocity of the first antenna is used for description. According to Radian = Angular velocity * Time, it is determined whether the change value of the state information is less than the first threshold. In other words, a change value of a radian of the first antenna needs to be compared with the first threshold. Further, an example in which the first threshold is 0.01 degree (°)/30 minutes (min) is used for description. If the sensor obtains the amplitude of the first antenna every 1 min within 30 min, and a difference between a maximum value and a minimum value among all amplitudes corresponding to the first antenna within 30 min is 0.02°, and because 0.005° is greater than 0.01°, it may be determined that a change value of the radian of the first antenna within 30 min is greater than the first threshold.

It should be understood that the foregoing example is merely used for understanding this solution. A specific change value of the state information of the first antenna is flexibly determined based on an actual status of the state information of the first antenna, and the first threshold also needs to be flexibly determined based on an actual requirement.

S303: Determine second target state information based on the change value of the state information of the first antenna, where the second target state information is used to adjust beam state information of the first antenna.

In this embodiment, because the state information of the first antenna includes the direction, a direction opposite to a direction of a change of the state information is determined as a direction included in the second target state information. Then, the beam state information of the first antenna may be adjusted based on the second target state information. Specifically, for example, a method for adjusting the beam state information of the first antenna includes but is not limited to adjusting an angle of the first antenna, or adjusting a secondary reflector or a primary reflector of the first antenna by using a motor included in the first antenna or in another driving manner, or adjusting a phase of a phased antenna. A specific manner of adjusting the beam state information of the first antenna is not limited herein.

In this embodiment, when the change value of the state information of the first antenna is less than the first threshold, that is, the first antenna is in a changing state, the second target state information is determined by using the change value of the state information of the first antenna. In this way, accuracy of beam adjustment when an antenna is in a changing state can be improved, and feasibility of this embodiment of this application can be improved.

The foregoing mainly describes the solutions provided in embodiments of this application from the perspective of the methods. It may be understood that, to implement the foregoing functions, a communication apparatus includes corresponding hardware structures and/or software modules for performing the functions. A person of ordinary skill in the art should easily be aware that, with reference to modules and algorithm steps of examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

In view of this, the following describes a communication apparatus in this application in detail. FIG. 5 is a schematic diagram of an embodiment of a communication apparatus according to an embodiment of this application. As shown in the figure, a communication apparatus 500 includes:
a determining module 501, configured to determine that a change value of state information of a first antenna is less than a first threshold, where the state information includes any one or more of a direction, an amplitude, and an angular velocity of the antenna; and
an obtaining module 502, configured to obtain a receive power of the first antenna and a transmit power of a second antenna.

The determining module 501 is further configured to determine that a change value of state information of the second antenna is less than a second threshold.

The determining module 501 is further configured to determine first target state information based on the receive power of the first antenna and the transmit power of the second antenna, where the first target state information is used to adjust beam state information of the first antenna.

In some optional embodiments of this application, the determining module 501 is specifically configured to: obtain the state information of the first antenna; and
determine, based on the state information of the first antenna, that the change value of the state information of the first antenna is less than the first threshold.

In an implementation of this embodiment of this application,
the obtaining module 502 is specifically configured to: obtain a first receive power of the first antenna and a first transmit power of the second antenna when a beam angle of the first antenna is an initial beam angle;
obtain a second receive power of the first antenna and a second transmit power of the second antenna when the beam angle of the first antenna is a first angle, where the first angle is a sum of a preset adjustment angle and the initial beam angle, and there is a correspondence between the preset adjustment angle, the first receive power, and the first transmit power;
obtain a third receive power of the first antenna and a third transmit power of the second antenna when the beam angle of the first antenna is the initial beam angle;
obtain a fourth receive power of the first antenna and a fourth transmit power corresponding to the second antenna when the beam angle of the first antenna is a second angle, where the second angle is a difference between the preset adjustment angle and the initial beam angle; and
obtain a fifth receive power of the first antenna and a fifth transmit power of the second antenna when the beam angle of the first antenna is the initial beam angle.

In some optional embodiments of this application, the determining module 501 is specifically configured to: determine, based on the receive power of the first antenna and the transmit power of the second antenna, that the change value of the state information of the second antenna is less than the second threshold; or
obtain the state information of the second antenna; and
determine, based on the state information of the second antenna, that the change value of the state information of the second antenna is less than the second threshold.

In some optional embodiments of this application, the determining module 501 is specifically configured to: determine a first gain based on the first receive power and the first transmit power;
determine a second gain based on the third receive power and the third transmit power;
determine a third gain based on the fifth receive power and the fifth transmit power; and
determine, when a difference between the first gain and the second gain is less than the second threshold and a difference between the second gain and the third gain is less than the second threshold, that the change value of the state information of the second antenna is less than the second threshold.

In some optional embodiments of this application, the determining module 501 is specifically configured to: determine a fourth gain based on the second receive power and the second transmit power;
determine a fifth gain based on the fourth receive power and the fourth transmit power; and
determine state information corresponding to the larger one of the fourth gain and the fifth gain as the first target state information.

In some optional embodiments of this application, the obtaining module 502 is further configured to obtain the state information of the first antenna.

The determining module 501 is further configured to determine, based on the state information of the first antenna, that the change value of the state information of the first antenna is greater than or equal to the first threshold.

The determining module 501 is further configured to determine second target state information based on the change value of the state information of the first antenna. The second target state information is used to adjust the beam state information of the first antenna.

The communication apparatus in this embodiment of this application may be a network device, or may be a chip used in the network device, or another combined part, component, or the like that can implement a function of the network device. When the communication apparatus is a network device, the obtaining module may be a transceiver, the transceiver may include an antenna, a radio frequency circuit, and the like, and the determining module may be a processor, for example, a baseband chip. When the communication apparatus is a component having functions of the network device, the obtaining module may be a radio frequency unit, and the determining module may be a processor.

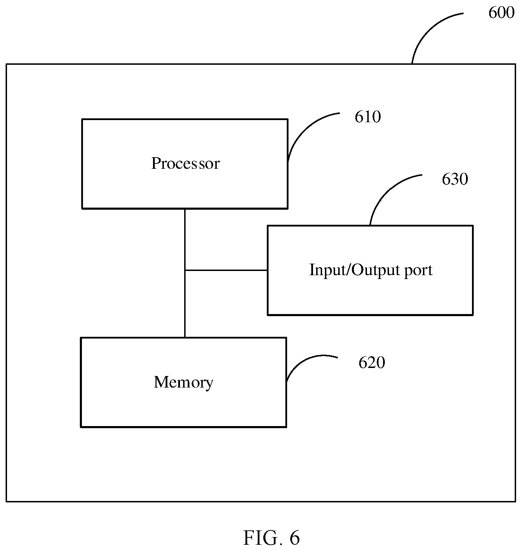

Specifically, FIG. 6 is a schematic diagram of a structure of an embodiment of a communication apparatus according to an embodiment of this application. As shown in FIG. 6, a communication apparatus 600 includes a processor 610, a memory 620 coupled to the processor 610, and an input/output port 630. In some implementations, the processor 610, the memory 620, and the input/output port 630 may be coupled together by using a bus. The communication apparatus 600 may be a server or a terminal device. The processor 610 may be a central processing unit (central processing unit, CPU), a network processor (network processor, NP), or a combination of a CPU and an NP. The processor may alternatively be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof. The processor 610 may be one processor, or may include a plurality of processors. The memory 620 may include a volatile memory (volatile memory), for example, a random access memory (random access memory, RAM). The processor 610 may execute code to implement a function of the determining module 501. The memory 620 may also include a non-volatile memory (non-volatile memory), for example, a read-only memory (read-only memory, ROM), a flash memory (flash memory), a hard disk (hard disk drive, HDD), or a solid-state drive (solid-state drive, SSD). The memory 620 may further include a combination of the foregoing types of memories.

The memory 620 stores computer-readable instructions, and the computer-readable instructions are used to perform the method according to any one of the possible implementations described above. After executing the computer-readable instructions, the processor 610 may perform a corresponding operation based on indications of the computer-readable instructions. In addition, after executing the computer-readable instructions in the memory 620, the processor 610 may perform, based on the indications of the computer-readable instructions, all operations that can be performed by the communication apparatus, for example, operations that the communication apparatus performs in the embodiments corresponding to FIG. 2 to FIG. 4. The input/output port 630 includes a port for outputting data and, in some cases, further includes a port for inputting data.

The processor 610 may invoke the input/output port 630 by executing code to obtain a receive power of a first antenna and state information of the first antenna. In some cases, the processor 610 may further invoke the input/output port 630 by executing code to obtain state information of a second antenna from another device.

An embodiment of this application further provides a digital processing chip. A circuit and one or more interfaces that are configured to implement functions of the processor 601 are integrated into the chip. When a memory is integrated into the digital processing chip, the digital processing chip may complete the method steps in any one or more of the foregoing embodiments. When a memory is not integrated into the digital processing chip, the digital processing chip may be connected to an external memory through an interface. The digital processing chip implements, based on program code stored in the external memory, the actions performed by the communication apparatus in the foregoing embodiments.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium, such as a USB flash drive, a removable hard disk, a read-only memory (ROM, read-only memory), a random access memory (RAM, random access memory), a magnetic disk, or an optical disc, that can store program code.

## Claims

1. A communication method, comprising:
determining that a change value of state information of a first antenna is less than a first threshold, wherein the state information comprises any one or more of a direction, an amplitude, and an angular velocity of the antenna;
obtaining a receive power of the first antenna and a transmit power of a second antenna;
determining that a change value of state information of the second antenna is less than a second threshold; and
determining first target state information based on the receive power of the first antenna and the transmit power of the second antenna, wherein the first target state information is used to adjust beam state information of the first antenna.

2. The method according to claim 1, wherein the determining that a change value of state information of a first antenna is less than a first threshold comprises:
obtaining the state information of the first antenna; and
determining, based on the state information of the first antenna, that the change value of the state information of the first antenna is less than the first threshold.

3. The method according to claim 1 or 2, wherein the obtaining a receive power of the first antenna and a transmit power of a second antenna comprises:
obtaining a first receive power of the first antenna and a first transmit power of the second antenna when a beam angle of the first antenna is an initial beam angle;
obtaining a second receive power of the first antenna and a second transmit power of the second antenna when the beam angle of the first antenna is a first angle, wherein the first angle is a sum of a preset adjustment angle and the initial beam angle, and there is a correspondence between the preset adjustment angle, the first receive power, and the first transmit power;
obtaining a third receive power of the first antenna and a third transmit power of the second antenna when the beam angle of the first antenna is the initial beam angle;
obtaining a fourth receive power of the first antenna and a fourth transmit power corresponding to the second antenna when the beam angle of the first antenna is a second angle, wherein the second angle is a difference between the preset adjustment angle and the initial beam angle; and
obtaining a fifth receive power of the first antenna and a fifth transmit power of the second antenna when the beam angle of the first antenna is the initial beam angle.

4. The method according to claim 3, wherein the determining that a change value of state information of the second antenna is less than a second threshold comprises:
determining, based on the receive power of the first antenna and the transmit power of the second antenna, that the change value of the state information of the second antenna is less than the second threshold; or
obtaining the state information of the second antenna; and
determining, based on the state information of the second antenna, that the change value of the state information of the second antenna is less than the second threshold.

5. The method according to claim 4, wherein the determining, based on the receive power of the first antenna and the transmit power of the second antenna, that the change value of the state information of the second antenna is less than the second threshold comprises:
determining a first gain based on the first receive power and the first transmit power;
determining a second gain based on the third receive power and the third transmit power;
determining a third gain based on the fifth receive power and the fifth transmit power; and
determining, when a difference between the first gain and the second gain is less than the second threshold and a difference between the second gain and the third gain is less than the second threshold, that the change value of the state information of the second antenna is less than the second threshold.

6. The method according to claim 5, wherein the determining first target state information based on the receive power of the first antenna and the transmit power of the second antenna comprises:
determining a fourth gain based on the second receive power and the second transmit power;
determining a fifth gain based on the fourth receive power and the fourth transmit power; and
determining state information corresponding to the larger one of the fourth gain and the fifth gain as the first target state information.

7. The method according to claim 1, wherein the method further comprises:
obtaining the state information of the first antenna;
determining, based on the state information of the first antenna, that the change value of the state information of the first antenna is greater than or equal to the first threshold; and
determining second target state information based on the change value of the state information of the first antenna, wherein the second target state information is used to adjust the beam state information of the first antenna.

8. A communication apparatus, comprising:
a determining module, configured to determine that a change value of state information of a first antenna is less than a first threshold, wherein the state information comprises any one or more of a direction, an amplitude, and an angular velocity of the antenna; and
an obtaining module, configured to obtain a receive power of the first antenna and a transmit power of a second antenna, wherein
the determining module is further configured to determine that a change value of state information of the second antenna is less than a second threshold; and
the determining module is further configured to determine first target state information based on the receive power of the first antenna and the transmit power of the second antenna, wherein the first target state information is used to adjust beam state information of the first antenna.

9. The communication apparatus according to claim 8, wherein
the determining module is specifically configured to: obtain the state information of the first antenna; and
determine, based on the state information of the first antenna, that the change value of the state information of the first antenna is less than the first threshold.

10. The communication apparatus according to any one of claim 8 or 9, wherein
the obtaining module is specifically configured to: obtain a first receive power of the first antenna and a first transmit power of the second antenna when a beam angle of the first antenna is an initial beam angle;
obtain a second receive power of the first antenna and a second transmit power of the second antenna when the beam angle of the first antenna is a first angle, wherein the first angle is a sum of a preset adjustment angle and the initial beam angle, and there is a correspondence between the preset adjustment angle, the first receive power, and the first transmit power;
obtain a third receive power of the first antenna and a third transmit power of the second antenna when the beam angle of the first antenna is the initial beam angle;
obtain a fourth receive power of the first antenna and a fourth transmit power corresponding to the second antenna when the beam angle of the first antenna is a second angle, wherein the second angle is a difference between the preset adjustment angle and the initial beam angle; and
obtain a fifth receive power of the first antenna and a fifth transmit power of the second antenna when the beam angle of the first antenna is the initial beam angle.

11. The communication apparatus according to claim 10, wherein
the determining module is specifically configured to: determine, based on the receive power of the first antenna and the transmit power of the second antenna, that the change value of the state information of the second antenna is less than the second threshold; or
obtain the state information of the second antenna; and
determine, based on the state information of the second antenna, that the change value of the state information of the second antenna is less than the second threshold.

12. The communication apparatus according to claim 11, wherein
the determining module is specifically configured to: determine a first gain based on the first receive power and the first transmit power;
determine a second gain based on the third receive power and the third transmit power;
determine a third gain based on the fifth receive power and the fifth transmit power; and
determine, when a difference between the first gain and the second gain is less than the second threshold and a difference between the second gain and the third gain is less than the second threshold, that the change value of the state information of the second antenna is less than the second threshold.

13. The communication apparatus according to claim 12, wherein
the determining module is specifically configured to: determine a fourth gain based on the second receive power and the second transmit power;
determine a fifth gain based on the fourth receive power and the fourth transmit power; and
determine state information corresponding to the larger one of the fourth gain and the fifth gain as the first target state information.

14. The communication apparatus according to claim 8, wherein
the obtaining module is further configured to obtain the state information of the first antenna;
the determining module is further configured to determine, based on the state information of the first antenna, that the change value of the state information of the first antenna is greater than or equal to the first threshold; and
the determining module is further configured to determine second target state information based on the change value of the state information of the first antenna, wherein the second target state information is used to adjust the beam state information of the first antenna.

15. A communication system, wherein the communication system comprises the communication apparatus according to claims 8 to 14.
